# EUROPEAN PATENT APPLICATION

(11) **EP 4 775 346 A1**
(43) Date of publication of application: **15.07.2026**
(21) Application number: 25867163.5
(22) Date of filing: 25.09.2025
(51) Int. Cl.: B23K 26/066, B23K 26/21, B23K 37/04, H01M 50/538

(54) **CURRENT COLLECTOR PLATE WELDING DEVICE FOR BATTERY, AND CURRENT COLLECTOR PLATE WELDING METHOD USING SAME**

(30) Priority: 11.10.2024 KR 20240138155
(71) Applicant: LG ENERGY SOLUTION, LTD., Seoul 07335 (KR)
(72) Inventor: KIM, Taeheon, Daejeon 34122 (KR); JEON, Dongmin, Daejeon 34122 (KR); SHIM, Kyuhun, Daejeon 34122 (KR); PARK, Jaeseok, Daejeon 34122 (KR); HYUN, Taehwan, Daejeon 34122 (KR)
(74) Representative: Goddar, Heinz J.
(86) International application number: PCT/KR2025/015030
(87) International publication number: WO 2026/079740

(57) **Abstract**

A current collector plate welding device for a battery for welding a current collector plate to an electrode assembly according to one embodiment of the present invention comprises: a welding mask comprising an alignment pin arranged to protrude on one side; and a current collector plate carrier on which the current collector plate is disposed and comprising an alignment groove into which the alignment pin is inserted.

The current collector plate welding device for a battery and the current collector plate welding method according to an embodiment of the present invention have the effect of improving the welding quality of the current collector plate by ensuring concentricity between the current collector plate carrier and the welding mask.

## Description

### [TECHNICAL FIELD]

The present invention relates to a battery cell manufacturing device, a method for manufacturing a battery cell using the device, a battery cell, and a battery pack, and more particularly to a current collector plate welding device for a battery capable of improving the welding accuracy of a current collector plate, and a method for welding the current collector plate using the device.

### [BACKGROUND ART]

Unlike non-rechargeable primary batteries, secondary batteries are batteries that can be charged and discharged, and they are applied not only to portable devices but also to vehicles driven by an electric drive source, such as electric vehicles (EVs) and hybrid electric vehicles (HEVs).

Types of secondary batteries currently in widespread use include lithium-ion batteries, lithium-polymer batteries, nickel-cadmium batteries, nickel-metal hydride batteries, and nickel-zinc batteries. The operating voltage of such a unit secondary battery cell, that is, a unit battery cell, is about 2.5 V to 4.6 V. Therefore, when a higher output voltage is required, a battery pack is formed by connecting a plurality of battery cells in series. In addition, depending on the charge/discharge capacity required for the battery pack, a plurality of battery cells may be connected in parallel to configure the battery pack. Accordingly, the number of battery cells included in the battery pack may be variously determined depending on the required output voltage or charge/discharge capacity.

When a plurality of battery cells are connected in series and/or in parallel to form a battery pack, it is common to first configure a battery module consisting of at least one, preferably a plurality of battery cells, and then to use at least one such battery module together with additional components to configure the battery pack. Here, a battery module means a component in which a plurality of battery cells are connected in series and/or in parallel, and a battery pack may mean a component in which a plurality of battery modules are connected in series and/or in parallel to increase capacity and output.

The battery cells are classified into pouch-type, cylindrical, or prismatic types according to the external shape of the battery case.

Among these, cylindrical cells are primarily housed in a metal case having a cylindrical structure, thereby exhibiting excellent safety, and are advantageous in that they can realize high energy density by accommodating a jelly-roll type electrode assembly therein, while also facilitating the configuration of a large-capacity power storage device by connecting multiple cells in series or in parallel.

The electrode assembly housed in the cylindrical case is a rechargeable power-generating element having a stacked structure of a positive electrode, a separator, and a negative electrode, and is classified into a jelly-roll type, a stack type, and a stack/folding type. In the jelly-roll type, a separator is interposed between elongated sheet-type positive and negative electrodes coated with active material, and the assembly is wound; the stack type is a form in which a plurality of positive and negative electrodes of a predetermined size are sequentially stacked with a separator interposed; and the stack/folding type is a hybrid structure of the jelly-roll type and the stack type. Among them, the jelly-roll electrode assembly has the advantages of easy manufacture and high energy density per unit weight.

The jelly-roll electrode assembly is a wound form with a separator interposed between a positive electrode and a negative electrode each coated with an active material; a positive-electrode tab protruding to the upper side of the electrode assembly is disposed on the positive electrode, and a negative-electrode tab protruding to the lower side of the electrode assembly may be disposed on the negative electrode.

A current collector plate can be welded to the jelly-roll electrode assembly, and during welding the concentricity of the current collector plate and the welding mask is very important; however, in the case of rotary equipment, it is difficult to apply a structure for separate correction.

### [SUMMARY OF THE INVENTION]

### [TECHNICAL PROBLEM]

The present invention is intended to solve the problems described above, and an object thereof is to provide a current collector plate welding device for a battery capable of improving the welding quality of a current collector plate by ensuring concentricity between a current collector plate carrier and a welding mask during a current collector plate welding process, and to provide a method of welding a current collector plate using the device.

### [SOLUTION TO THE PROBLEM]

A current collector plate welding device for a battery for welding a current collector plate to an electrode assembly according to one embodiment of the present invention comprises: a welding mask comprising an alignment pin arranged to protrude on one side; and a current collector plate carrier on which the current collector plate is disposed and comprising an alignment groove into which the alignment pin is inserted.

In addition, the alignment pins are respectively disposed on both sides of the welding mask.

In addition, the alignment grooves are respectively disposed on both sides of the current collector plate carrier.

In addition, the alignment pin has an end whose diameter gradually decreases.

In addition, the alignment groove includes an expanding portion at an upper part thereof, the diameter of which gradually increases toward the outside.

In addition, the alignment groove is disposed on an outer circumferential surface of the current collector plate carrier.

In addition, the welding mask includes a through-hole for welding.

In addition, the device further includes a carrier pocket in which the current collector plate carrier is supported.

In addition, the carrier pocket includes a support portion having a support surface on an inner circumferential surface on which the current collector plate carrier is supported.

In addition, the device further includes a carrier pocket in which the current collector plate carrier is supported.

In addition, the welding mask further includes, at a lower portion thereof, a suction pad for adsorbing the current collector plate.

A method for welding a current collector plate to an electrode assembly according to an embodiment of the present invention includes, in a current collector plate welding device including a welding mask having an alignment pin protruding on one side and a current collector plate carrier on which the current collector plate is disposed and including an alignment groove into which the alignment pin is inserted: inserting the alignment pin of the welding mask into the alignment groove of the current collector plate carrier; and welding the current collector plate to the electrode assembly.

In addition, the method for welding a current collector plate further includes, after the inserting step and before the welding step, a step of separating the current collector plate carrier from the welding mask.

In addition, the method for welding a current collector plate further includes, after the inserting step and before the separating step, a step of adsorbing the current collector plate to the welding mask.

### [ADVANTAGEOUS EFFECTS OF THE INVENTION]

The current collector plate welding device and the welding method according to the present invention have the effect of improving the welding quality of the current collector plate by ensuring concentricity between the current collector plate carrier and the welding mask.

### [BRIEF DESCRIPTION OF DRAWINGS]

FIG. 1 is a drawing illustrating a cylindrical battery cell in one embodiment of the present invention.
FIG. 2 is a drawing illustrating a longitudinal cross-section of a cylindrical battery cell in one embodiment of the present invention.
FIG. 3 is a drawing illustrating an electrode assembly in one embodiment of the present invention.
FIG. 4 is a drawing illustrating the appearance of an electrode assembly before being wound in one embodiment of the present invention.
FIG. 5 is a drawing for explaining a wound form of an electrode assembly in one embodiment of the present invention.
FIG. 6 is a drawing for explaining the coupling (joining) of a current collector plate to an electrode assembly in one embodiment of the present invention.
FIG. 7 is a drawing illustrating a current collector plate welding device in one embodiment of the present invention.
FIG. 8 is a perspective view of a welding mask in one embodiment of the present invention.
FIG. 9 is a drawing illustrating a carrier pocket in one embodiment of the present invention.
FIG. 10 is a drawing illustrating (a) a positive-electrode current collector plate carrier and (b) a negative-electrode current collector plate carrier in one embodiment of the present invention.
FIG. 11 is a drawing illustrating a welding mask and a current collector plate carrier being combined in one embodiment of the present invention.
FIG. 12 is a drawing illustrating a battery pack according to one embodiment of the present invention.
FIG. 13 is a drawing illustrating an electric vehicle equipped with the battery pack according to one embodiment of the present invention.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below but may be implemented in various other forms; the embodiments are provided merely to ensure a complete disclosure of the present invention and to fully inform those skilled in the art of the scope of the invention. The present invention is defined only by the scope of the claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated for clarity. Throughout the specification, similar parts are designated by the same reference numerals. When an element such as a layer, film, region, or plate is referred to as being "on" another element, it may be disposed directly on the other element or one or more intervening elements may be present therebetween. Conversely, when a part is referred to as being "directly on" another part, it means that there is no intervening part therebetween. Also, when an element such as a layer, film, region, or plate is referred to as being "under" another element, it may be disposed directly beneath the other element or with one or more intervening elements may be present therebetween. Conversely, when a part is referred to as being "directly under" another part, it means that there are no intervening parts.

A current collector plate welding device for a battery according to one embodiment of the present invention, and a current collector plate welding method using the same, are described in detail with reference to the drawings.

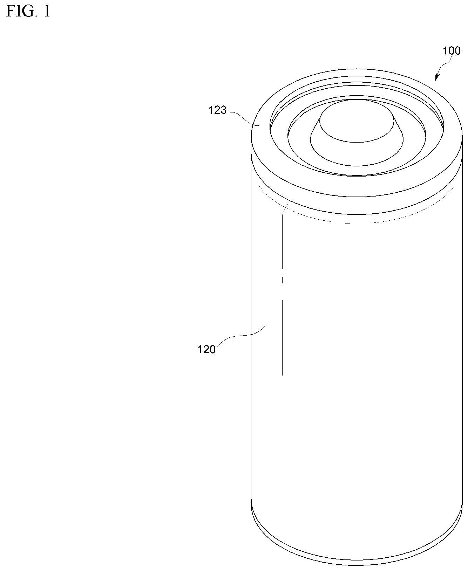

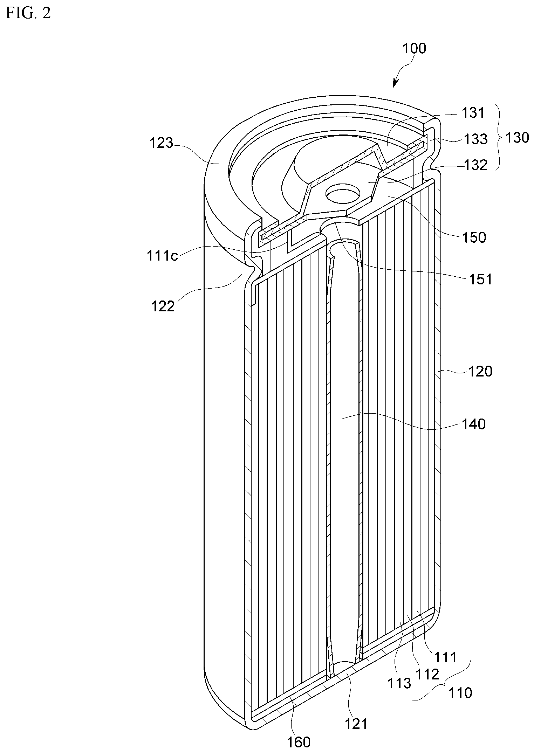

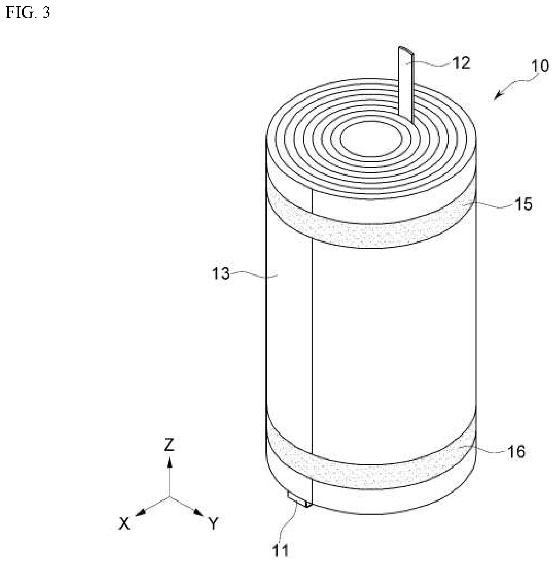

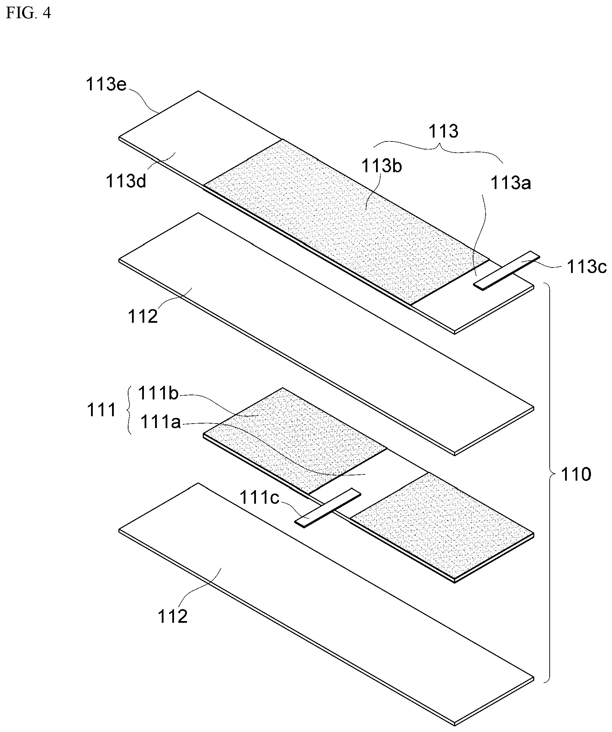

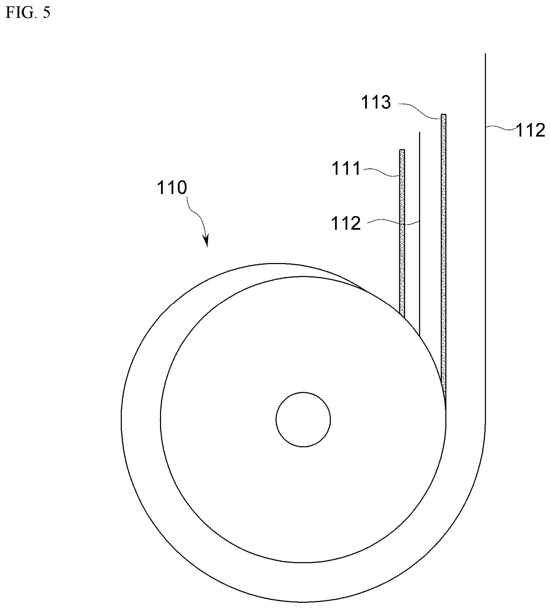

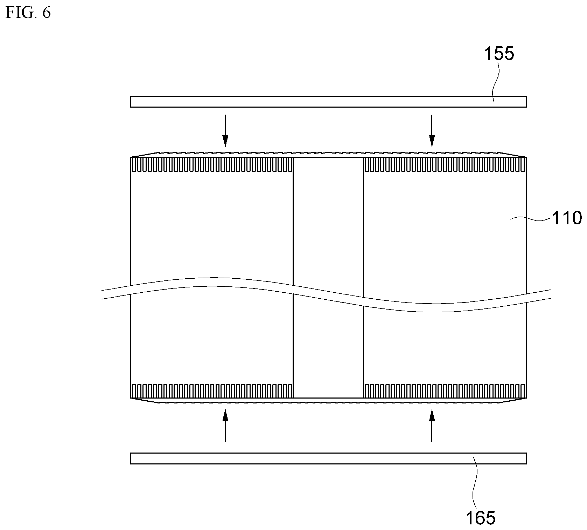

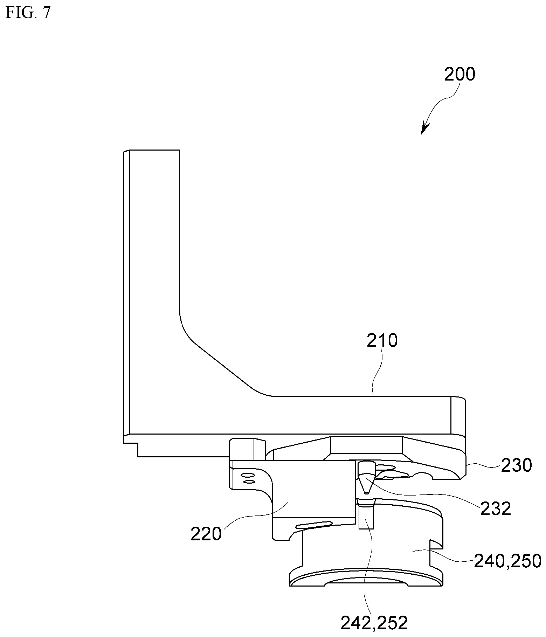

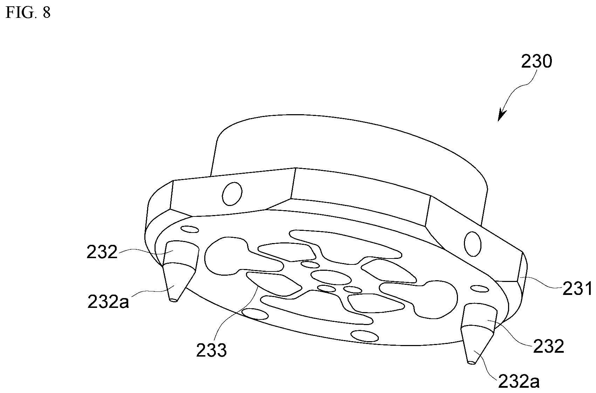

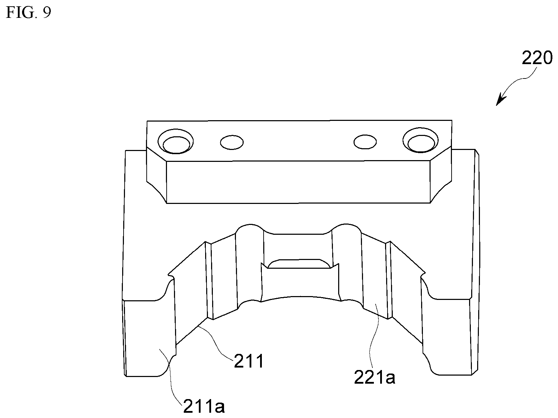

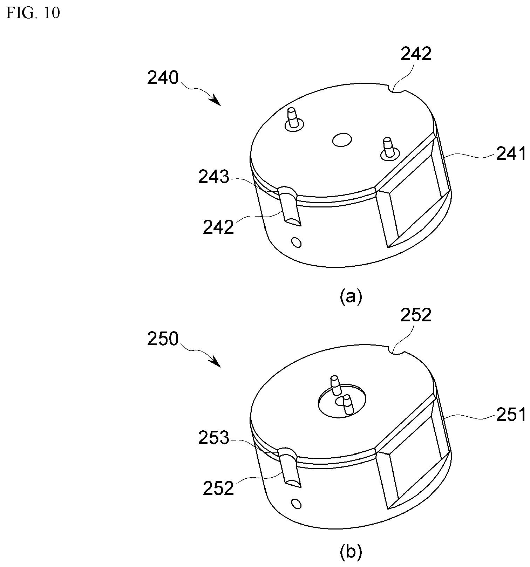

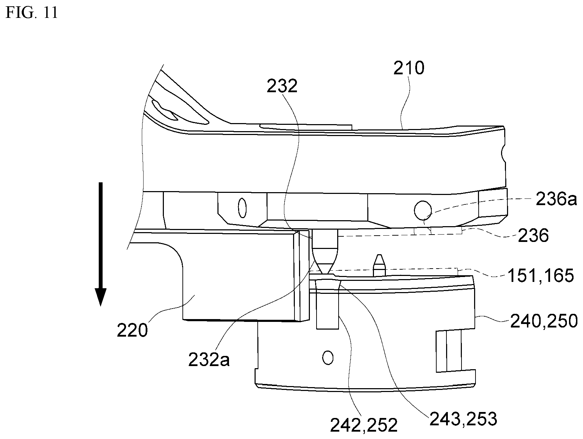

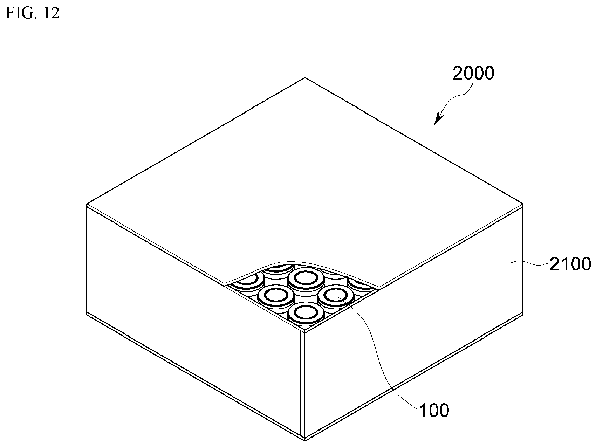

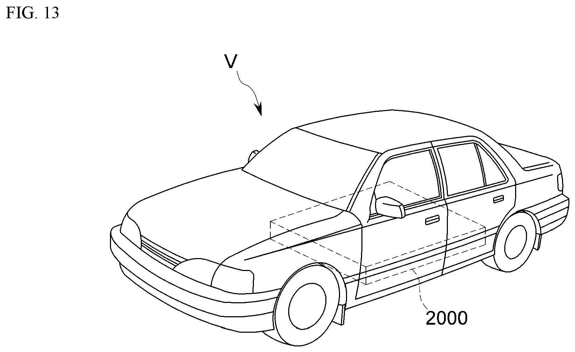

FIG. 1 is a drawing showing a cylindrical battery cell in one embodiment of the present invention, FIG. 2 is a drawing showing a longitudinal cross-section of a cylindrical battery cell in one embodiment of the present invention, FIG. 3 is a drawing showing an electrode assembly in one embodiment of the present invention, FIG. 4 is a drawing showing an electrode assembly before being wound in one embodiment of the present invention, FIG. 5 is a drawing for explaining a wound form of an electrode assembly in one embodiment of the present invention, FIG. 6 is a drawing for explaining joining a current collector plate to an electrode assembly in one embodiment of the present invention, FIG. 7 is a drawing showing a current collector plate welding device in one embodiment of the present invention, FIG. 8 is a perspective view of a welding mask in one embodiment of the present invention, FIG. 9 is a drawing showing a carrier pocket in one embodiment of the present invention, FIG. 10 is a drawing showing (a) a positive-electrode current collector plate carrier and (b) a negative-electrode current collector plate carrier in one embodiment of the present invention, FIG. 11 is a drawing showing a welding mask and a current collector plate carrier being combined in one embodiment of the present invention, FIG. 12 is a drawing showing a battery pack in one embodiment of the present invention, and FIG. 13 is a drawing showing an electric vehicle equipped with a battery pack in one embodiment of the present invention.

Before explaining the current collector plate welding device for a battery in this embodiment, a battery cell 100 will be described with reference to FIGS. 1 to 5.

The battery cell 100 may be a cylindrical battery cell 100 in which the electrode assembly 110 is built into a cylindrical can.

A cylindrical battery cell 100 may include a jelly roll-shaped electrode assembly 110 and a battery case 120 for accommodating the electrode assembly 110. An upper insulating member 150 may be disposed on the upper side of the electrode assembly 110, and a lower insulating member 160 may be disposed on the lower side of the electrode assembly 110.

The electrode assembly 110 has a jelly roll-shaped structure in which a first electrode 111, a second electrode 113, and a separator 112 are interposed and wound, and a center pin 140 can be inserted into its center.

A cylindrical battery cell 100 can be formed by housing the electrode assembly 110 in a battery case 120, injecting an electrolyte into the battery case 120, and then joining a cap assembly 130 to the top of the battery case 120. The battery case 120 is cylindrical, and a jelly roll-shaped electrode assembly 110 can be housed therein to implement a cylindrical secondary battery.

The battery case 120 may include a beading portion 122 and a crimping portion 123.

The beading portion 122 is for stable coupling of the cap assembly 130, can be formed along the circumferential direction on the upper outer surface of the battery case 120, and may be recessed toward the center of the electrode assembly 110. The beading portion 122 can prevent movement of the electrode assembly 110.

The crimping portion 123 may be disposed above the beading portion 122 and formed to wrap around the edge portion of the cap assembly 130 along the circumferential direction. The crimping portion 123 can ensure stable coupling of the cap assembly 130.

The cap assembly 130 may include a top cap 131 forming an electrode terminal, a cap plate 132, and a gasket 133 for maintaining airtightness.

The top cap 131 can form a positive terminal.

The gasket 133 may be mounted on the upper inner surfaces of the crimping portion 123 and the beading portion 122 to increase the sealing force between the cap assembly 130 and the battery case 120.

The second electrode tab 111c may extend upward from the electrode assembly 110. Specifically, it can extend from the second electrode 111 of the electrode assembly 110. The second electrode tab 111c may be a positive electrode tab.

The second electrode tab 111c is connected to the cap plate 132, so that the top cap 131 can function as an electrode terminal (positive terminal). An opening 151 is formed in the upper insulating member 150, and the second electrode tab 111c can be connected to the cap plate 132 through the opening 151.

The center pin 140 generally includes a metal material to impart a certain strength and is formed of a cylindrical structure made by bending a plate into a round shape. In addition to self-heating, the center pin 140 can function as a passage for fixing and supporting the electrode assembly 110 and releasing gas generated by internal reactions during charging, discharging, and operation.

The electrolyte injected into the battery case 120 may be a non-aqueous electrolyte containing a lithium salt, and the non-aqueous electrolyte containing a lithium salt is composed of a non-aqueous electrolyte and a lithium salt. Non-aqueous electrolytes include, but are not limited to, non-aqueous organic solvents, organic solid electrolytes, and inorganic solid electrolytes.

The battery cell 100 does not necessarily have to be provided as a cylindrical battery cell 100, and may be provided as a battery cell of another shape, such as a prismatic battery cell.

FIG. 4 is a drawing showing the appearance of the electrode assembly 110 before being wound. The electrode assembly 110 can be formed in the form of a jelly roll by winding together a first electrode 113, a second electrode 111, and a separator 112 in the shape of a long sheet. A separator 112 can be interposed between the first electrode 113 and the second electrode 111. Additionally, to prevent the first electrode 113 and the second electrode 111 from contacting when rolled into a jelly roll shape, a separator 112 may be additionally placed under the second electrode 111.

The first electrode 113 may include a first electrode current collector 113a and a first active material layer 113b on the first electrode current collector 113a. The first active material layer 113b can be formed by applying an electrode active material to one or both sides of the first electrode current collector 113a. Additionally, a first electrode tab 113c may be attached to an area of the first electrode current collector 113a where the electrode active material is not applied.

As an example, as shown, no electrode active material may be applied to the core-side end of the first electrode current collector 113a, and the first electrode tab 113c may be attached in this area. The first electrode 113 may be a negative electrode, and the first electrode tab 113c may be a negative-electrode tab.

An exposed portion 113d, on which the electrode active material is not applied, may also be disposed in an area of the first electrode current collector 113a located at the outer periphery of the electrode assembly 110. The exposed portion 113d may be a negative-electrode uncoated portion.

The second electrode 111 may include a second electrode current collector 111a and a second active material layer 111b on the second electrode current collector 111a. The second active material layer 111b can be formed by applying an electrode active material to one or both sides of the second electrode current collector 111a. Additionally, a second electrode tab 111c may be attached to an area of the second electrode current collector 111a where the electrode active material is not applied. As an example, as illustrated, a second electrode tab 111c may be attached at the center of the second electrode current collector 111a, and on the second electrode current collector 111a, a second active material layer 111b may be arranged on both sides of the second electrode tab 111c. The second electrode 111 may be a positive electrode, and the second electrode tab 111c may be a positive electrode tab.

A sealing tape 170 may be disposed on the outer circumferential surface of the electrode assembly 110. In one embodiment of the present invention, the sealing tape 170 can be placed on the upper and lower portions of the main surface of the electrode assembly 110 as shown in FIG. 3. That is, the sealing tape 170 can be arranged along the circumferential direction on the outer surface of the jelly roll-shaped electrode assembly 110, and can be attached to the outer surface of the electrode assembly 110 by an adhesive layer on the lower surface of the sealing tape 170.

The sealing tape 170 may be attached to the outer circumferential surface of the first electrode 113 (negative electrode) disposed at the outer periphery of the electrode assembly 110. And, the sealing tape 170 may be placed across the end 113e of the first electrode 113

The sealing tape 170 may be disposed on the exposed portion 113d of the first electrode 113 (negative electrode) disposed at the outer periphery of the electrode assembly 110.

A sealing tape 170 may be placed on the outer surface of the electrode assembly 110 to prevent the jelly roll-shaped electrode assembly 110 from coming loose.

In this embodiment, as shown in FIG. 6, current collector plates 155, 165 may be bonded to the upper and/or lower surface of the electrode assembly 110. The current collector plates 155, 165 can be joined by welding to the electrode assembly 110.

In the first electrode current collector 113a of the first electrode 113, a plurality of notched tabs may be formed along the longitudinal direction at the edge of the first electrode current collector 113a in the uncoated portion where the electrode active material is not applied, and similarly, in the second electrode current collector 111a of the second electrode 111, a plurality of notched tabs may be formed along the longitudinal direction at the edge of the second electrode current collector 111a in the uncoated portion where the electrode active material is not applied.

In this way, the non-coated portions of the first electrode 113 and the second electrode 111 in which the notched tabs are formed can be bent in the core direction, and the current collector plates 155, 165 can be welded to the non-coated portions of the first electrode 113 and/or the second electrode 111 bent in the core direction.

Hereinafter, the current collector plate welding device 200 and the current collector plate welding method using the same in this embodiment will be described in detail with reference to FIG. 6 to FIG. 10.

In this embodiment, the current collector plate welding device 200 may include a mounting bracket 210, a carrier pocket 220, a welding mask 230, and current collector plate carriers 240, 250.

A carrier pocket 220, a welding mask 230, and the like can be mounted on the mounting bracket 210, and the mounting bracket 210 can be coupled to a welding jig.

The welding mask 230 can be detachably coupled to the mounting bracket 210 and can include a mask plate 231 and an alignment pin 232 as shown in FIG. 8.

The mask plate 231 may include one or more through-holes 235 passing through the mask plate 231. The through hole 233 may be a through hole 233 for laser irradiation, and the laser may be irradiated to the collector plate 255, 265 through the through hole 233 so that the collector plate 255, 265 may be welded.

The alignment pin 232 can be positioned to protrude from one surface of the mask plate 231 and can be inserted into the alignment grooves 242, 252 of the current collector plate carriers 240, 250.

The end 232a of the alignment pin 232 may be gradually tapered to a pointed shape. In this way, since the end 232a of the alignment pin 232 is formed in a tapered shape with a gradually decreasing diameter, it can be easily inserted into the alignment grooves 242, 252 of the current collector plate carriers 240, 250, and the current collector plate carriers 240, 250 can be easily aligned.

In this embodiment, the alignment pins 232 can be placed on both sides of the mask plate 231, and can be placed at positions symmetrical to each other with their centers interposed on the mask plate 231.

In this way, when the alignment pin 232 is placed in the welding mask 230 and the alignment pin 232 is inserted into the alignment grooves 242, 252 of the current collector plate carriers 240, 250, the current collector plate carriers 240, 250 are automatically aligned, thereby ensuring concentricity between the current collector plate carriers 240, 250 and the welding mask 230, and the current collector plates 155, 165 can be welded at an accurate position, thereby improving the welding quality (see FIG. 11).

In addition, a suction pad 236 capable of adsorbing the current collector plates 155, 165 may be disposed on a lower portion of the welding mask 230, and a vacuum line 236a may be connected to the suction pad 236 (see FIG. 11). A vacuum pump can be connected to the vacuum line 236a. Therefore, the current collector plates 155, 165 can be adsorbed to the suction pad 236 connected to the vacuum line 236a. A hole communicating with the through hole 233 may be formed in the suction pad 236.

After the welding mask 230 approaches the current collector plates 155, 165 disposed on the current collector plate carriers 240, 250 and the alignment pins 232 of the welding mask 230 are inserted into the alignment grooves 242, 252 of the current collector plate carriers 240, 250 to align the current collector plate carriers 240, 250, the current collector plates 155, 165 may be adsorbed to the welding mask 230 by the suction pad 236.

In addition, a protective gas pipe for supplying protective gas to prevent oxidation of the welding area may be connected to the welding mask 230. The line may be a nitrogen supply line.

The carrier pocket 220 can be detachably attached to the mounting bracket 210 and can be placed on one side of the mounting bracket 210 to which the welding mask 230 is attached.

The carrier pocket 220 may include a support member 221 on which the current collector plate carrier 240, 250 is supported. One side of the current collector plate carriers 240, 250 can be supported by the support portion 221, and the support portion 221 can be formed in a shape corresponding to the side of the current collector plate carriers 240, 250. Accordingly, as shown in FIG. 10, when the current collector plate carriers 240, 250 are formed in a cylindrical shape, the support member 221 may have an inner circumferential surface in the shape of an arc.

The support member 221 may have multiple support surfaces 221a. A plurality of support surfaces 221a can be spaced apart and arranged along the inner surface of the support member 221, and the current collector plate carriers 240, 250 can be supported by contacting the plurality of support surfaces 221a.

The above-mentioned current collector plate carriers 240, 250 may be for transporting the current collector plates 155, 165. In FIG. 10, (a) illustrates a positive electrode current collector plate carrier 240, and (b) illustrates a negative electrode current collector plate carrier 250. The current collector plate carriers 240, 250 may include a carrier bodies 241, 251 and the alignment grooves 242, 252.

The carrier bodies 241, 251 may be for supporting the current collector plates 155, 165, and the current collector plates 155, 165 may be supported and transported on the carrier bodies 241, 251. The current collector plates 155, 165 can be placed on the upper part of the carrier bodies 241, 251 and transported. The carrier bodies 241, 251 may be approximately cylindrical as shown, but are not necessarily limited thereto and may have other shapes.

The alignment grooves 242, 252 are arranged on one side of the carrier bodies 241, 251, and the alignment pin 232 of the welding mask 230 can be inserted into the alignment grooves 242, 252. The alignment grooves 242, 252 can be arranged on both sides of the carrier bodies 241, 251, and can be arranged at symmetrical positions with the center of the carrier bodies 241, 251 in between.

The expanding portions 243, 253 with an inner diameter that gradually increases can be placed on the upper portion of the alignment grooves 242, 252. In this way, by arranging the expansion portions 243, 253 on the upper portion of the alignment grooves 242, 252, the alignment pin 232 can be easily inserted into the alignment grooves 242, 252, and even if the current collector plate carriers 240, 250 are in a misaligned position, the current collector plate carriers 240, 250 can be aligned when the alignment pin 232 is inserted into the alignment grooves 242, 252.

Additionally, the alignment grooves 242, 252 may be formed in a concave shape from the outer circumferential surface to the inner surface as shown. The cross section of the alignment grooves 242, 252 on the plane may be a semicircle or less, and therefore, the alignment pin 232 inserted into the alignment grooves 242, 252 may be inserted into the alignment grooves 242, 252 with half of its circumference or less.

A method for welding a collector plate using a current collector welding device 200 for a battery having the above configuration includes: a welding mask 230 including an alignment pin 232 protrudingly arranged on one side; and a collector plate carrier 240, 250 having the collector plates 155, 165 arranged thereon and including an alignment groove 241, 251 into which the alignment pin 232 is inserted; a step of inserting the alignment pin 232 of the welding mask 230 into the alignment groove 241, 251 of the collector plate carrier 240, 250; and a step of welding the collector plate carriers 240, 250; and a step of welding the current collector plates 155, 165 to the electrode assembly 110.

Below, the method for welding the current collector plate is described in more detail with reference to FIG. 11.

With the current collector plates 155, 165 placed on the current collector plate carriers 240, 250, the current collector plate carriers 240, 250 are moved to a transfer position, and with the welding mask 230 coupled to the mounting bracket 210, the welding mask 230 is moved to the current collector plate carriers 240, 250.

The welding mask 230 approaches the current collector plates 155, 165 placed on the current collector plate carriers 240, 250, and the alignment pin 232 of the welding mask 230 is inserted into the alignment grooves 242, 252 of the current collector plate carriers 240, 250, thereby aligning the current collector plate carriers 240, 250. And, the current collector plate carriers 240, 250 are supported in the carrier pocket 220. Additionally, the current collector plates 155, 165 can be adsorbed to the welding mask 230 by the suction pad 236 placed under the welding mask 230.

In this way, when the current collector plate 155, 165 is adsorbed to the welding mask 230 and fixed to the welding mask 230, the current collector plate carrier 240, 250 can be separated from the welding mask 230.

After the current collector plate carriers 240, 250 are separated from the welding mask 230, the current collector plates 155, 165 welding process can be performed.

The current collector plates 255, 265 can be welded to the electrode assembly 110 by a welding machine, and welding can be performed while the current collector plates 255, 265 are in close contact with the electrode assembly 110. The welding machine (not shown) may be, for example, a laser welder, and a laser irradiated from the laser welder penetrates the through-hole 233 of the welding mask 230 and is irradiated onto the current collector plates 255, 265, thereby welding the current collector plates 255, 265 to the electrode assembly 110.

In this embodiment, as described above, when the current collector plate carriers 240, 250 are coupled to the welding mask 230, automatic alignment is achieved, so no additional position correction is required and the welding quality of the current collector plate can be improved.

Meanwhile, a plurality of cylindrical battery cells 100 may be accommodated in a pack case 2100 to form a battery pack 2000 (see FIG. 12).

The battery pack 2000 may further include various control and protection systems such as a BMS (Battery Management System), and the battery pack 2000 can be applied to various devices. Specifically, it may be applied to means of transportation such as electric bicycles, electric vehicles, and hybrid vehicles, or to an energy storage system (ESS), but is not limited thereto and is applicable to various devices that can use secondary batteries.

FIG. 13 is a view illustrating an electric vehicle (V) equipped with the battery pack 2000. In the electric vehicle V, the wheels are driven by a motor powered by the battery pack 2000, whereby the electric vehicle can be operated.

While the present invention has been described with reference to preferred embodiments, it is not limited to the embodiments described above, and various changes and modifications may be made by those skilled in the art without departing from the spirit of the invention.

### [INDUSTRIAL APPLICABILITY]

The present invention can provide a current collector plate welding device for a battery and a current collector plate welding method that can improve the welding quality of the current collector plate by ensuring concentricity between the current collector plate carrier and the welding mask.

## Claims

1. A current collector plate welding device for a battery for welding a current collector plate to an electrode assembly, comprising:
a welding mask comprising an alignment pin protruding from one side; and
a current collector plate carrier on which the current collector plate is disposed and that comprises an alignment groove
into which the alignment pin is inserted.

2. The current collector plate welding device of claim 1, wherein
the alignment pins are respectively disposed on opposite sides of the welding mask.

3. The current collector plate welding device of claim 2, wherein
the alignment grooves are respectively disposed on opposite sides of the current collector plate carrier.

4. The current collector plate welding device of claim 1, wherein
the alignment pin has an end whose diameter gradually decreases.

5. The current collector plate welding device of claim 1, wherein
the alignment groove comprises an expanding portion at an upper part thereof, the diameter of which gradually increases toward the outside.

6. The current collector plate welding device of claim 5, wherein
the alignment groove is disposed on an outer circumferential surface of the current collector plate carrier.

7. The current collector plate welding device of claim 1, wherein
the welding mask comprises a through-hole for welding.

8. The current collector plate welding device of claim 1, wherein
further comprising a carrier pocket in which the current collector plate carrier is supported.

9. The current collector plate welding device of claim 8, wherein
the carrier pocket comprises a support portion having a support surface on an inner circumferential surface on which the current collector plate carrier is supported.

10. The current collector plate welding device of claim 8, wherein
a mounting bracket to which the welding mask and the carrier pocket are coupled.

11. The current collector plate welding device of claim 1, wherein
the welding mask further comprises, at a lower portion thereof, a suction pad for adsorbing the current collector plate.

12. A method of welding a current collector plate to an electrode assembly, the method comprising:
in a current collector plate welding device comprising: a welding mask comprising an alignment pin protruding on one side; and a current collector plate carrier on which the current collector plate is disposed and comprising an alignment groove into which the alignment pin is inserted, inserting the alignment pin of the welding mask into the alignment groove of the current collector plate carrier; and
welding the current collector plate to the electrode assembly.

13. The method of claim 12, further comprising:
after the inserting step and before the welding step, separating the current collector plate carrier from the welding mask.

14. The method of claim 13, further comprising:
after the inserting step and before the separating step, adsorbing the current collector plate to the welding mask.
